# EUROPÄISCHE PATENTSCHRIFT

(11) **EP 3 082 518 B1**
(45) Veröffentlichungstag und Bekanntmachung des Hinweises auf die Patenterteilung: **29.11.2017**
(21) Anmeldenummer: 13815756.5
(22) Anmeldetag: 20.12.2013
(51) Int. Cl.: A47J 19/06

(54) **KNOBLAUCHSCHNEIDPRESSE**
GARLIC PRESS
PRESSE-AIL

(43) Veröffentlichungstag der Anmeldung: 26.10.2016
(73) Patentinhaber: Fissler GmbH, 55743 Idar-Oberstein (DE)
(72) Erfinder: THELEN, Arno, 55743 Idar-Oberstein (DE); SCHUHMACHER, Sven, 55743 Idar-Oberstein (DE)
(74) Vertreter: Patentanwälte Bauer Vorberg Kayser
(86) Internationale Anmeldenummer: PCT/EP2013/077813
(87) Internationale Veröffentlichungsnummer: WO 2015/090471

(56) Entgegenhaltungen:
- EP-A1- 0 134 093
- DE-A1- 19 826 490
- GB-A- 2 247 610

## Beschreibung

Die vorliegende Erfindung betrifft ein Gerät zu Schneiden und Pressen von Knoblauch, Zwiebeln usw., insbesondere eine Knoblauchschneidpresse zum gleichzeitigen Schneiden und Pressen von Knoblauch.

Bekannte Geräte zum Zerkleinern von Knoblauch und ähnlichem Schneidgut sind entweder als Presse oder als Schneide aufgebaut. Als Standardgerät zum Zerkleinern von Knoblauch werden beispielsweise Handpressen eingesetzt. Diese bestehen in der Regel aus mindestens 2 Hebelelementen, die an ihren Endbereichen eine Press- und eine Aufnahmeeinheit für den Knoblauch haben. An den gleichen Hebelelementenden ist eine bewegliche Lagerverbindung für die beiden Hebelelemente vorgesehen. Über die Hebelelemente lässt sich eine ausreichende Kraft zum Zerkleinern des Knoblauchs aufbringen. Bei diesem Wirkprinzip gibt es Ausführungen, bei denen der Knoblauch gepresst wird, hierbei dient eine Lochplatte in der Aufnahmekammer für den Knoblauch zum "Pressen" des Knoblauchs.

Bei diesem Wirkprinzip wird der Knoblauch innerhalb der Aufnahmekammer komprimiert, über die Presse in Form gedrückt, gequetscht und dann durch die Löcher ausgepresst. Das Ergebnis ist ein Matsch von Knoblauch mit einem hohen Anteil an freigesetztem Öl. Die entstehende Masse wird von vielen Benutzern als nachteilig empfunden, insbesondere weil sie schwierig zu verteilen ist, beispielsweise in Salaten.

Weiterhin haben derartige Handpressen den Nachteil, dass der Knoblauch über einen Teil der eingebrachten Kraft an den äußersten Rand der Aufnahmekammer gedrückt wird. Beim Zudrücken der Knoblauchpresse bewegt sich der Knoblauch automatisch in die äußerste Ecke der Aufnahmekammer. Ein Knoblauchkeil verbleibt nach dem Pressvorgang in der Aufnahmekammer und stellt einen letztendlich nicht mehr nutzbaren Restanteil des Knoblauchs dar.

Alternativ zur beschriebenen Ausführung kann die Lochplatte durch ein Gitter aus Schnittmessern ersetzt werden. Bei dieser Ausführungsweise wird der Knoblauch beim Pressvorgang in kleine Stangen geschnitten. Knoblauchöl wird in diesem Fall nur in geringstem Maß freigesetzt. Die so erhaltenen Knoblauchstangen können in einem folgenden Arbeitsgang beispielsweise zu Würfeln weiter zerkleinert werden. Für beide Ausführungsarten dieses Wirkprinzips (Lochblech/Schneidgitter) gibt es zusätzliche Anbauteile, die z. B. zum einfachen Entnehmen des Knoblauchrests dienen oder ein Abstreifen des Knoblauchs vom Schneidgitter ermöglichen.

Ein zweites Wirkprinzip besteht aus einem zylindrischen Rohrelement, das gleichzeitig ein Schneidgitter aufnimmt und einem Stößelelement, das im Inneren des Rohrelements aufgenommen und geführt wird. Beim Zusammenfahren der beiden Elemente wird der im Zwischenraum von Stößel und Schneidgitter aufgenommene Knoblauch durch das Schneidgitter in kleine Stangen geschnitten. Vorteilhafterweise ist der verbleibende Restanteil bei diesem Wirkprinzip gering. Durch zusätzliche aufwendige konstruktive Maßnahmen kann ein im gleichen Vorgang angetriebenes Schneidmesser die Stangen zu Würfel zerkleinern. Nachteilig ist die aufwendige konstruktive Ausführung und - im Falle von anhaftenden Knoblauchölen - die schwierige Reinigungsmöglichkeit aufgrund der vielen geschachtelten Bauteile. Weiterhin nachteilig ist die konstruktive Ausführung hinsichtlich der einzusetzenden Kraft. Ein Feingewinde mit vielen Drehbewegungen realisiert eine geringe Benutzungskraft. Die Druckschrift EP-A-0 134 093 offenbart eine Knoblauchpresse, bestehend aus einem Aufnahmekörper 12 mit einer zylindrischen Aufnahmekammer zur Aufnahme von Pressgut, die ausgehend von einem Austrittsende einen ersten Zylinderhohlraum mit glatter Innenwand und einen sich daran anschließenden zweiten Zylinderhohlraum 13 mit einem Innengewinde 14 aufweist, einem lösbar am Austrittsende der Aufnahmekammer angeordnetem, gitterförmigen Presselement 24 mit darin eingebrachten Öffnungen 26, einem zylinderförmigen Kolben 16 zum Einschrauben in die Aufnahmekammer, bestehend aus einem Kolbenabschnitt mit glatter Außenfläche und einer vor Kopf an seinem freien Ende angeordneten Schubfläche 37 für das Pressgut, einem Gewindeabschnitt 19 mit einem Außengewinde 18, das mit dem Innengewinde 14 des zweiten Zylinderhohlraums 13 korrespondiert, und einem Griffabschnitt 20 zum Greifen und Drehen des Kolbens. Die Aufgabe der vorliegenden Erfindung besteht darin, einen Zerkleinerer für Knoblauch oder Ähnliches zu schaffen, der die oben genannten Nachteile verringert oder nicht aufweist. Der Zerkleinerer soll dabei möglichst einfach aufgebaut, kostengünstig herstellbar und leicht zu reinigen sein. Weiterhin soll er eine optimale Ausnutzung des Schneidguts gewährleisten. Das mit dem Zerkleinerer erzeugte Endprodukt soll geschmacklich und ästhetisch möglichst hohen Anforderungen genügen.

Die Aufgabe wird erfindungsgemäß durch eine Knoblauchschneidpresse gemäß Anspruch 1 gelöst. Zur Vereinfachung und zum besseren Verständnis wird im Folgenden der Begriff Knoblauch synonym für sämtliche Produkte verwendet, die mit der erfindungsgemäßen Knoblauchschneidpresse zerkleinert werden können.

Die erfindungsgemäße Knoblauchschneidpresse kombiniert in einfachster Weise die Vorgänge Pressen und Schneiden. Aufgrund der gewählten geometrischen Abmessungen der Öffnungen und der dazwischenliegenden Stege presst und schneidet das erfindungsgemäße Schneidpresselement gleichermaßen. Das Endprodukt erfüllt höchste geschmackliche und ästhetische Ansprüche. Es verbleiben keine ungenutzten Knoblauchreste und das Endprodukt liegt in ansprechender und gut verteilbarer Form vor.

Ein wesentlicher Vorteil besteht insbesondere auch darin, dass die Knoblauchschneidpresse aus nur drei Bauteilen besteht, nämlich dem Aufnahmekörper, dem Kolben und dem Schneidpresselement. Der Aufnahmekörper dient dem Aufnehmen und Halten des Knoblauchs, der Kolben übernimmt das Drücken und das Schneidpressgitter das Schneiden und Pressen. Die erfindungsgemäße Knoblauchschneidpresse ist somit ausschließlich auf die funktional notwendigen Bauteile beschränkt, auf Bauteile die Herstellungskosten erhöhen oder das Reinigen erschweren, wurde bewusst verzichtet.

Erfindungsgemäß ist das Schneidpresselement lösbar mit dem Aufnahmekörper verbunden. Dadurch sind ein einfaches und schnelles Lösen sowie ein gründliches Reinigen möglich. Auch kann ein beschädigtes oder abgenutztes Schneidpresselement leicht ausgetauscht bzw. ersetzt werden.

In einer besonders vorteilhaften Ausführungsvariante ist das Schneidpresselement zweiteilig aufgebaut, bestehend aus einem scheibenförmigen Schneidgitter, das die Öffnungen aufweist, und einem Haltering, der lösbar mit dem Austrittsende des Aufnahmekörpers verbindbar ist und in dem das Schneidgitter gehalten ist.

Das Schneidgitter ist vorzugsweise einstückig ausgeführt. Die Öffnungen sind beispielsweise rund, oval, quadratisch, rechteckig, sechseckig etc.. und vorteilhafterweise, abweichend vom bekannten Stand der Technik, erfindungsgemäß gelasert, geätzt oder wasserstrahl-geschnitten.

Die Form und der Durchmesser der Öffnungen bestimmen in direkter Abhängigkeit den Zerkleinerungsgrad und die Schneidform des Knoblauchs. Die Stege zwischen den Öffnungen dienen zum einen als Schnittkanten für den Knoblauch, zum anderen komprimieren die Stege beim Einschieben des Kolbens in die Aufnahmekammer die Oberfläche des Knoblauchs bei dem Press- /Schneidvorgang, wodurch Knoblauchöle freigesetzt werden.

Es hat sich gezeigt, dass die besten Ergebnisse mit einer Stegbreite von 0,3 bis 0,6 mm bei einem Öffnungsdurchmesser von 2,2 bis 2,8 mm erreicht werden. Bei diesen geometrischen Voraussetzungen sind der Anteil an freigesetztem Knoblauchöl und die Konsistenz des Endprodukts optimal. Es besteht dann eine deutlich geringere Neigung zum Zerquetschen des Knoblauchs als bei der herkömmlichen Knoblauchpresse, jedoch eine größere Neigung als beim reinen Prinzip "Schneiden". Die Kombination aus Schneiden und Pressen hat weiterhin den Vorteil, dass die notwendigen Bedienkräfte in einem angenehmen geringem Maß gehalten werden.

Die genaue Führung des Kolbens im Aufnahmeköper führt zu einer normalen Kraftwirkung des Kolbens auf den Knoblauch in Richtung des Schneidpresselements. Um eine angenehme und zügige Bewegung des Kolbens bei wenig Drehbewegung im Aufnahmekörper zu realisieren, weisen das Innengewinde des Aufnahmekörpers und das Außengewinde des Kolbens eine entsprechend große Gewindesteigung auf.

Um die Konstruktion zu vereinfachen und die Herstellungskosten gering zu halten, ist das Außengewinde, bezogen auf eine Längsachse des Kolbens, sehr kurz gehalten. Letztendlich reichen zumindest zwei vorstehende einzelne Gewindenasen aus, die einander möglichst diametral gegenüberliegend angeordnet sind und in das Innengewinde des Aufnahmekörpers eingeschraubt werden können. Es hat sich aber gezeigt, dass ein den Kolben einmal um 360° umlaufender Gewindegang den Kolben im Aufnahmekörper optimal führt und hält.

Eine leichtgängige Bedienbarkeit wird erfindungsgemäß auch durch optimal abgestimmte Werkstoffpaarungen realisiert. Insbesondere eignet sich als Gleitpartner Polyoxymethylen (POM bzw. Polyacetal) oder eine Teflon® (PTFE) Beschichtung wenigstens eines Bauteils, also des Aufnahmekörpers oder Kolbens.

Erfindungsgemäß wird die leichtgängige Bedienbarkeit auch durch die vorteilhafte Geometrie der verschiedenen Abschnitte des Aufnahmekörpers und des Kolbens weiter gesteigert. Der Griffabschnitt weist einen Außendurchmesser auf, der mindestens 20% größer ist als der Außendurchmesser des Kolbenabschnitts des Kolbens und des Innendurchmessers des ersten Zylinderhohlraums der Aufnahmekammer, in dem sich der Knoblauch befindet und in die der Kolben mit seiner Treibfläche einfährt. Somit wird die aufgebrachte Kraft des Benutzers auf eine verhältnismäßig kleine Wirkfläche konzentriert bzw. der notwendige Kraftaufwand reduziert.

Aus ergonomischen Gründen verläuft der Griffabschnitt konisch, er ist beispielsweise an seinem freien Ende etwa 30% und an seinem dem Gewindeabschnitt zugewandten Ende etwa 65% größer als der Außendurchmesser des Zylinderabschnitts.

Innerhalb des Kolbens kann erfindungsgemäß eine Kammer zur Aufnahme weiterer Küchenhilfsmittel vorgesehen sein. Zu diesem Zweck ist der Kolben vorzugsweise hohl ausgeführt und von oben, also von seinem freien Ende aus, zugänglich. Die Kammer kann durch einen Deckel verschließbar sein. Beispielsweise kann die Kammer zur Aufnahme eines Knoblauchschälers genutzt werden.

Die Erfindung wird anhand der nachfolgenden Figuren näher erläutert. Diese sind lediglich als Ausführungsbeispiel zu verstehen. Es zeigen:
- Figur 1:: eine Knoblauchschneidpresse in isometrischer Ansicht,
- Figur 2:: die Knoblauchschneidpresse aus Figur 1 in zusammengesetzten Zustand im Querschnitt,
- Figur 3:: die Knoblauchschneidpresse aus Figur 1 in getrennten Zustand im Querschnitt,
- Figur 4:: ein scheibenförmiges Schneidgitter in Draufsicht,
- Figur 5: ein scheibenförmiges Schneidgitter im Querschnitt
- Figur 6:: einen Haltering in isometrischer Ansicht,

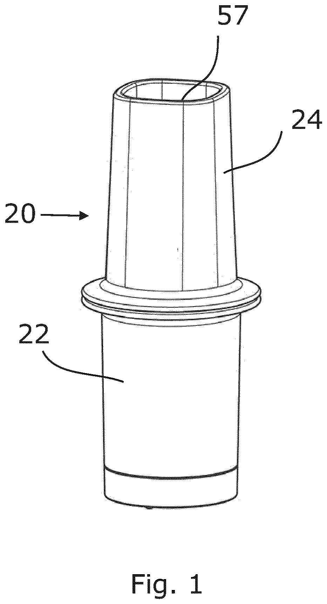

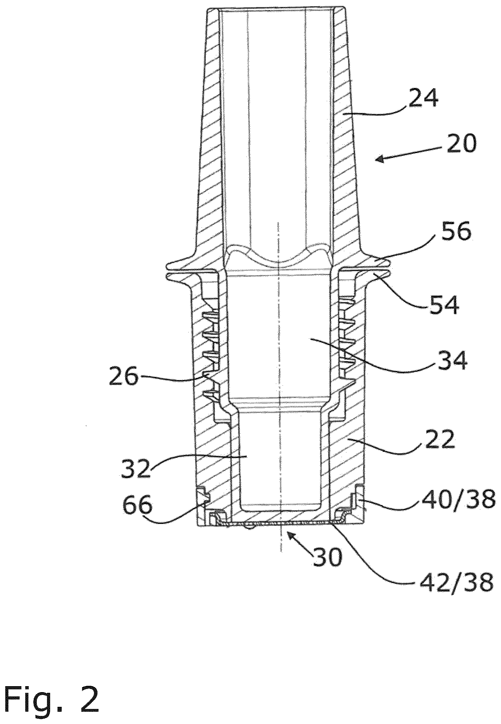

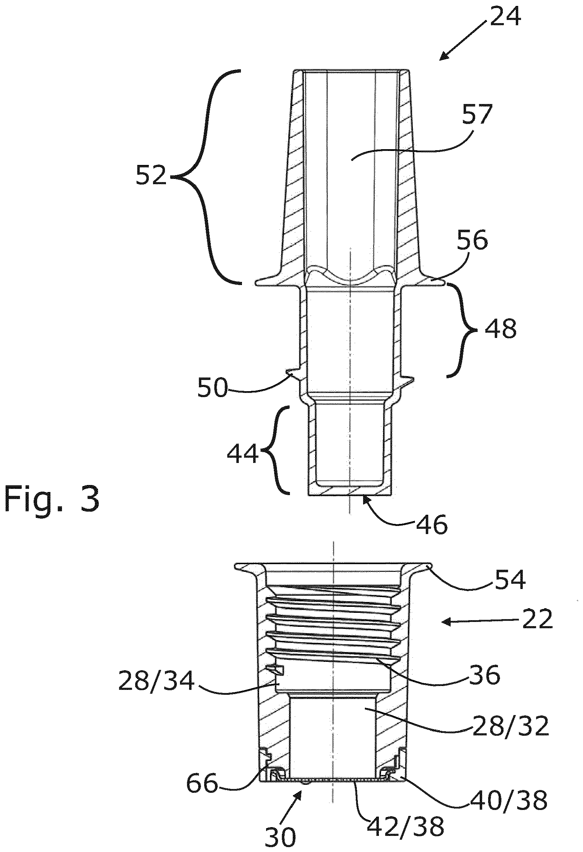

Die Figuren 1-3 zeigen eine erfindungsgemäße Knoblauchschneidpresse 20 mit einem Aufnahmekörper 22, in den ein zylinderförmiger Kolben 24 über ein Gewinde 26 einschraubbar ist. Der Aufnahmekörper weist eine zylindrische Aufnahmekammer 28 zur Aufnahme von Schneidpressgut auf, die, ausgehend von einem Austrittsende 30, einen ersten Zylinderhohlraum 32 mit glatter Innenwand und einen sich daran anschließenden zweiten Zylinderhohlraum 34 mit einem Innengewinde 36 aufweist.

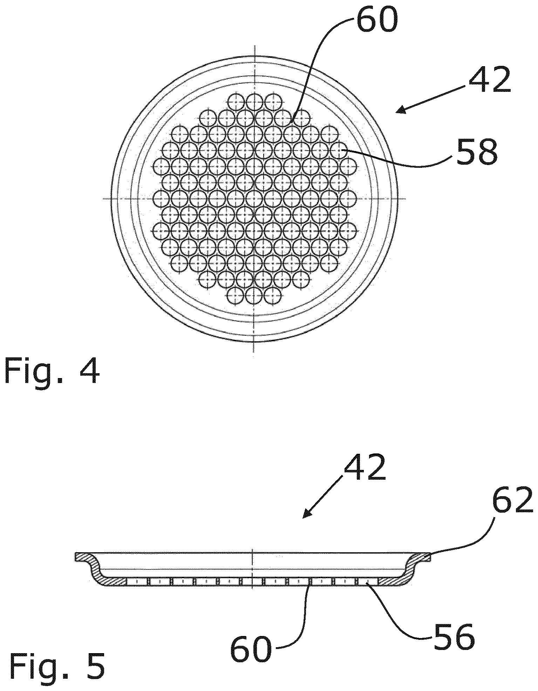

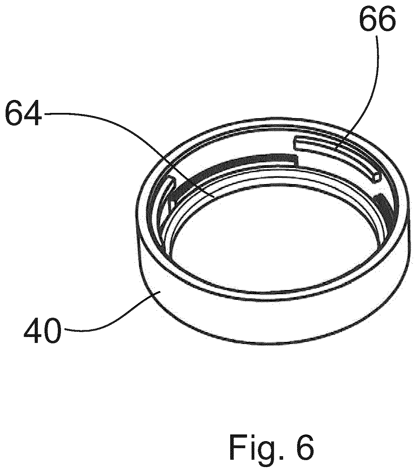

Am Austrittsende 30 ist ein Schneidpresselement 38 lösbar angebracht. Im gezeigten Ausführungsbeispiel ist das Schneidpresselement 38 zweiteilig ausgeführt, es weist einen Haltering 40 und ein scheibenförmiges Schneidgitter 42 auf. Das Schneidgitter 42 ist in der Verschlusskappe 40 gehalten, die wiederum über eine Art Bajonettverschluss mit dem Austrittsende 30 der Aufnahmekammer 28 verbunden ist. Das scheibenförmige Schneidgitter 42 ist insbesondere auch in den Figuren 4 und 5 und der Haltering 40 in Figur 6 dargestellt.

Der Kolben 24 weist einen Kolbenabschnitt 44 mit glatter Außenfläche und einer vor Kopf an seinem freien Ende angeordneten Schubfläche 46 auf. Dieser Kolbenabschnitt 44 weist eine Länge auf, die der Länge des ersten Zylinderhohlraums 32 entspricht. An den Kolbenabschnitt 44 schließt sich ein Gewindeabschnitt 48 an, der im gezeigten Ausführungsbeispiel einen größeren Außendurchmesser als der Kolbenabschnitt 44 aufweist. Der Gewindeabschnitt 48 ist mit einem Außengewinde 50 versehen, das nur einen um 360° umlaufenden Gewindegang aufweist. Der übrige Bereich des Gewindeabschnitts 48 ist gewindefrei ausgeführt.

Der Gewindeabschnitt 48 geht in einen Griffabschnitt 52 über, der zum Greifen Drehen des Kolbens 24 dient. Der Begriff Abschnitts 52 weist wiederum einen größeren Außendurchmesser als der Gewindeabschnitt 48 und somit auch als der Kolbenabschnitt 44 auf.

Der Außendurchmesser des Griffabschnitts 52 ist im gezeigten Ausführungsbeispiel etwa 30% größer als der Außendurchmesser des Kolbenabschnitts 44 des Kolbens 24. Außerdem nimmt der Außendurchmesser des Griffabschnitts 52 ausgehend von seinem freien Ende in Richtung des Gewindeabschnitts 48 zu, der Außendurchmesser des Griffabschnitts 48 ist an seinem freien Ende etwa 30% und an seinem dem Gewindeabschnitt 48 zugewandten Ende etwa 65% größer als der Außendurchmesser des Kolbenabschnitts 44.

An dem dem Austrittsende 30 gegenüberliegenden freien Ende des Aufnahmekörpers 22 ist eine umlaufende erste Anlageschulter 54 ausgebildet, an die eine in dem Übergang zwischen dem Griffabschnitt 52 und dem Gewindeabschnitt 48 angeordnete zweite umlaufende Anlageschulter 56 dann zur Anlage kommt, wenn die Knoblauchschneidpresse 20 vollständig zusammengeschraubt ist.

Innerhalb des Kolbens 24 ist es eine Kammer 57 angeordnet, die beispielsweise zur Aufnahme von Küchenhelfern bzw. Küchengeräten geeignet ist. Denkbar ist beispielsweise die Aufnahme eines Knoblauchschälers. Die Kammer 57 ist dadurch ausgebildet, dass der Kolben 24 hohl ausgeführt ist. Im gezeigten Ausführungsbeispiel bleibt die Kammer 57 unverschlossen, alternativ ist aber auch die Verwendung eines Deckels denkbar.

Die Figuren vier und fünf verdeutlichen den Aufbau des Schneidpresselements 38 bzw. des scheibenförmigen Schneidgitters 42. Dieses ist kreisförmig ausgeführt und weist Öffnungen 58 auf. Zwischen den Öffnungen 58 sind Stege 60 ausgebildet, die das Schneiden und Pressen des Knoblauchs bewirken. Es hat sich gezeigt, dass die besten Ergebnisse mit einer Stegbreite zwischen den Öffnungen 58 von 0,3 bis 0,6 mm bei einem Öffnungsdurchmesser von 2,2 bis 2,8 mm erreicht werden. Das Schneidgitter 42 ist, wie Figur 5 zeigt, tellerförmig ausgeführt und weist einen S-förmigen Randbereich 62 auf, der im Querschnitt gegenüber einer Grundfläche des Schneidgitters 42 erhöht angeordnet ist.

Das Schneidgitter 42 wird für den Gebrauch in dem insbesondere in Figur 6 erkennbaren Haltering 40 eingelegt und ist über den Randbereich 62, der auf einem Innenrand 64 des Halterings 40 zur Anlage kommt, gehalten. Der Haltering 40 weist Vorsprünge 66 auf, die zusammen mit entsprechenden Vorsprüngen 66 am Austrittsende 30 des Aufnahmekörpers 22 eine Art Bajonettverbindung ausbilden.

Die Erfindung ist nicht auf das gezeigte Ausführungsbeispiel beschränkt.

## Patentansprüche

1. Knoblauchschneidpresse (20), bestehend aus
- einem Aufnahmekörper (22) mit einer zylindrischen Aufnahmekammer (28) zur Aufnahme von Schneidpressgut, die ausgehend von einem Austrittsende (30) einen ersten Zylinderhohlraum (32) mit glatter Innenwand und einen sich daran anschließenden zweiten Zylinderhohlraum (34) mit einem Innengewinde (36) aufweist,
- einem lösbar am Austrittsende (30) der Aufnahmekammer (28) angeordnetem, gitterförmigen Schneidpresselement (38) mit darin eingebrachten Öffnungen (58), die einen maximalen Öffnungsdurchmesser von 2,2 bis 2,8 mm aufweisen und zwischen denen Stege (60) mit einer maximalen Stegbreite von 0,3 bis 0,6 mm angeordnet sind,
- einem zylinderförmigen Kolben (24) zum Einschrauben in die Aufnahmekammer (28), bestehend aus
- einem Kolbenabschnitt (44) mit glatter Außenfläche und einer vor Kopf an seinem freien Ende angeordneten Schubfläche (46) für das Schneidpressgut,
- einem Gewindeabschnitt (48) mit einem Außengewinde (50), das mit dem Innengewinde (36) des zweiten Zylinderhohlraums (34) korrespondiert,
- einem Griffabschnitt (52) zum Greifen und Drehen des Kolbens (24).

2. Knoblauchschneidpresse (20) nach Anspruch 1, **dadurch gekennzeichnet, dass** das Schneidpresselement (38) durch ein einstückiges Schneidgitter (42) gebildet ist.

3. Knoblauchschneidpresse (20) nach einem der Ansprüche 1 und 2, **dadurch gekennzeichnet, dass** die Öffnungen (58) kreisförmig ausgeführt sind.

4. Knoblauchschneidpresse (20) nach einem der Ansprüche 1 bis 3, **dadurch gekennzeichnet, dass** das Schneidpresselement (38) zweiteilig aufgebaut, bestehend aus einem scheibenförmigen Schneidgitter (42), das die Öffnungen (58) aufweist, und einem Haltering (40), der lösbar mit dem Austrittsende (30) des Aufnahmekörpers (22) verbindbar ist.

5. Knoblauchschneidpresse (20) nach Anspruch 4, **dadurch gekennzeichnet, dass** der Haltering (40) über einen Bajonettverschluss mit dem Aufnahmekörper (22) verbindbar ist.

6. Knoblauchschneidpresse (20) nach einem der Ansprüche 1-5, **dadurch gekennzeichnet, dass** der erste Zylinderhohlraum (32) einen Innendurchmesser aufweist, der geringer als der Innendurchmesser des zweiten Zylinderhohlraums (34) und entsprechend der Außendurchmesser des Kolbenabschnitts (44) geringer als der Außendurchmesser des Gewindeabschnitts (48) ist.

7. Knoblauchschneidpresse (20) nach einem der Ansprüche 1 bis 6, **dadurch gekennzeichnet, dass** an dem dem Austrittsende (30) gegenüberliegenden freien Ende des Aufnahmekörpers (22) eine umlaufende erste Anlageschulter (54) ausgebildet ist, an die eine im Übergang zwischen dem Griffabschnitt (52) und dem Gewindeabschnitt (48) angeordnete zweite umlaufende Anlageschulter (56) in vollständig zusammengeschraubten Zustand der Knoblauchschneidpresse (20) zur Anlage kommt.

8. Knoblauchschneidpresse (20) nach einem der Ansprüche 1 bis 7, **dadurch gekennzeichnet, dass** der Griffabschnitt (52) einen Außendurchmesser aufweist, der mindestens 30% größer als der Außendurchmesser des Kolbenabschnitts (44) des Kolbens (24) ist.

9. Knoblauchschneidpresse (20) nach Anspruch 8, **dadurch gekennzeichnet, dass** der Außendurchmesser des Griffabschnitts (52) ausgehend von seinem freien Ende in Richtung des Gewindeabschnitts (48) zunimmt.

10. Knoblauchschneidpresse (20) nach Anspruch 9, **dadurch gekennzeichnet, dass** der Außendurchmesser des Griffabschnitts (52) an seinem freien Ende etwa 30% und an seinem dem Gewindeabschnitt (48) zugewandten Ende etwa 65% größer als der Außendurchmesser des Kolbenabschnitts (44) ist.

11. Knoblauchschneidpresse (20) nach einem der Ansprüche 1 bis 10, **dadurch gekennzeichnet, dass** zumindest eines der beiden Bauteile Aufnahmekörper (22) oder Kolben (24) aus Polyoxymethylen gefertigt sind.

12. Knoblauchschneidpresse (20) nach einem der Ansprüche 1 bis 10, **dadurch gekennzeichnet, dass** zumindest eines der Bauteile Aufnahmekörper (22) oder Kolben (24) aus PTFE gefertigt ist.

13. Knoblauchschneidpresse (20) nach einem der Ansprüche 1 bis 11, **dadurch gekennzeichnet, dass** zumindest eines der Bauteile Aufnahmekörper (22) oder Kolben (24) mit PTFE beschichtet ist.

14. Knoblauchschneidpresse (20) nach einem der Ansprüche 1 bis 13, **dadurch gekennzeichnet, dass** die Öffnungen (58) in das Schneidpresselement (38) nach einem der Verfahren Lasern, Ätzen oder Wasserstrahlschneiden eingebracht sind.

15. Knoblauchschneidpresse (20) nach einem der Ansprüche 1 bis 14, **dadurch gekennzeichnet, dass** der Kolben (24) hohl ausgeführt ist und dadurch eine Kammer (57) aufweist.

## Claims

1. A garlic cutting press (20), comprising:
- a receiving body (22) with a cylindrical receiving chamber (28) for receiving cut/pressed material, which has, starting from an outlet end (30), a first cylinder cavity (32) with a smooth inner wall and a second cylinder cavity (34) adjacent thereto with an inner thread (36),
- a grid-shaped cutting/pressing element (38), which is detachably deposited at the outlet end (30) of the receiving chamber (28), with openings (58) incorporated therein that have a maximum opening diameter of 2.2 to 2.8 mm and between which webs (60) with a maximum web width of 0.3 to 0.6 mm are disposed,
- a cylindrical piston (24) for screwing into the receiving chamber (28), comprising
- a piston portion (44) with a smooth outer surface and a pushing surface (46), which is disposed just in front of its free end, for the cut/pressed material,
- a threaded portion (48) with an outer thread (50) corresponding to the inner thread (36) of the second cylinder cavity (34),
- a grip portion (52) for gripping and rotating the piston (24).

2. The garlic cutting press (20) according to claim 1, **characterized in that** the cutting/pressing element (38) is formed by a one-piece cutting grid (42).

3. The garlic cutting press (20) according to any one of the claims 1 and 2, **characterized in that** the openings (58) are configured in a circular manner.

4. The garlic cutting press (20) according to any one of the claims 1 to 3, **characterized in that** the cutting/pressing element (38) has a two-part structure comprising a disc-shaped cutting grid (42) having the openings (58), and a retaining ring (40) that can be detachably connected to the outlet end (30) of the receiving body (22).

5. The garlic cutting press (20) according to claim 4, **characterized in that** the retaining ring (40) can be connected to the receiving body (22) via a bayonet lock.

6. The garlic cutting press (20) according to any one of the claims 1-5, **characterized in that** the first cylinder cavity (32) has an inner diameter that is smaller than the inner diameter of the second cylinder cavity (34) and, accordingly, the outer diameter of the piston portion (44) is smaller than the outer diameter of the threaded portion (48).

7. The garlic cutting press (20) according to any one of the claims 1 to 6, **characterized in that**, at the free end of the receiving body (22) opposite to the outlet end (30), a peripheral first abutting shoulder (54) is formed against which a second peripheral abutting shoulder (56), which is disposed in the transitioning portion between the grip portion (52) and the threaded portion (48), comes to rest in the state of the garlic cutting press (20) being fully screwed together.

8. The garlic cutting press (20) according to any one of the claims 1 to 7, **characterized in that** the grip portion (52) has an outer diameter which is at least 30% larger than the outer diameter of the piston portion (44) of the piston (24).

9. The garlic cutting press (20) according to claim 8, **characterized in that** the outer diameter of the grip portion (52) increases starting from its free end in the direction towards the threaded portion (48).

10. The garlic cutting press (20) according to claim 9, **characterized in that** the outer diameter of the grip portion (52) is about 30% larger at its free end, and about 65% larger at the end thereof facing towards the threaded portion (48), than the outer diameter of the piston portion (44).

11. The garlic cutting press (20) according to any one of the claims 1 to 10, **characterized in that** at least one of the two components receiving body (22) or piston (24) is made from polyoxymethylene.

12. The garlic cutting press (20) according to any one of the claims 1 to 10, **characterized in that** at least one of the components receiving body (22) or piston (24) is made from PTFE.

13. The garlic cutting press (20) according to any one of the claims 1 to 11, **characterized in that** at least one of the components receiving body (22) or piston (24) is coated with PTFE.

14. The garlic cutting press (20) according to any one of the claims 1 to 13, **characterized in that** the openings (58) are incorporated into the cutting/pressing element (38) in accordance with one of the methods lasering, etching or water jet cutting.

15. The garlic cutting press (20) according to any one of the claims 1 to 14, **characterized in that** the piston (24) is configured to be hollow and thus has a chamber (57).

## Revendications

1. Coupe/presse-ail (20) se composant
- d'un corps de réception (22) ayant une chambre de réception (28) cylindrique qui est destinée à recevoir du produit à couper et presser et qui comprend, à partir d'une extrémité de sortie (30), un premier espace creux cylindrique (32) à paroi intérieure lisse et un deuxième espace creux cylindrique (34) adjacent au premier et ayant un filetage intérieur (36),
- d'un élément à couper et presser (38) en forme de grille qui est disposé de manière amovible à l'extrémité de sortie (30) de la chambre de réception (28) et dans lequel sont ménagés des orifices (58) qui présentent un diamètre d'ouverture maximal compris entre 2,2 et 2,8 mm et entre lesquels sont disposées des entretoises (60) ayant une largeur maximale d'entretoise comprise entre 0,3 et 0,6 mm,
- d'un piston cylindrique (24) destiné à être vissé dans la chambre de réception (28), se composant
- d'une section de piston (44) ayant une surface extérieure lisse et une surface de poussée (46) pour le produit à couper et presser qui est disposée à son extrémité libre avant la tête,
- d'une section filetée (48) comprenant un filetage extérieur (50) qui correspond au filetage intérieur (36) du deuxième espace creux cylindrique (34),
- d'une section de préhension (52) servant à saisir et faire tourner ledit piston (24).

2. Coupe/presse-ail (20) selon la revendication 1, **caractérisé par le fait que** ledit élément à couper et presser (38) est formé par une grille de coupe (42) faite d'une seule pièce.

3. Coupe/presse-ail (20) selon l'une quelconque des revendications 1 et 2, **caractérisé par le fait que** les orifices (58) sont réalisés de manière circulaire.

4. Coupe/presse-ail (20) selon l'une quelconque des revendications 1 à 3, **caractérisé par le fait que** ledit élément à couper et presser (38) est réalisé en deux pièces, se composant d'une grille de coupe (42) en forme de disque qui présente lesdits orifices (58) et d'une bague de maintien (40) qui peut être reliée de manière amovible à l'extrémité de sortie (30) du corps de réception (22).

5. Coupe/presse-ail (20) selon la revendication 4, **caractérisé par le fait que** ladite bague de maintien (40) peut être reliée par l'intermédiaire d'un joint à baïonnette au corps de réception (22).

6. Coupe/presse-ail (20) selon l'une quelconque des revendications 1 à 5, **caractérisé par le fait que** le premier espace creux cylindrique (32) présente un diamètre intérieur qui est inférieur au diamètre intérieur du deuxième espace creux cylindrique (34), et, de manière correspondante, le diamètre extérieur de la section de piston (44) est inférieur au diamètre extérieur de la section filetée (48).

7. Coupe/presse-ail (20) selon l'une quelconque des revendications 1 à 6, **caractérisé par le fait qu'**à l'extrémité libre du corps de réception (22) opposée à l'extrémité de sortie (30) est réalisé un premier épaulement d'appui (54) circonférentiel contre lequel un deuxième épaulement d'appui (56) circonférentiel disposé dans la transition entre ladite section de préhension (52) et ladite section filetée (48) vient en appui lorsque le coupe/presse-ail (20) est à l'état où il est complètement vissé.

8. Coupe/presse-ail (20) selon l'une quelconque des revendications 1 à 7, **caractérisé par le fait que** ladite section de préhension (52) présente un diamètre extérieur qui est d'au moins 30 % supérieur au diamètre extérieur de la section de piston (44) du piston (24).

9. Coupe/presse-ail (20) selon la revendication 8, **caractérisé par le fait que** le diamètre extérieur de la section de préhension (52) augmente à partir de son extrémité libre en direction de la section filetée (48).

10. Coupe/presse-ail (20) selon la revendication 9, **caractérisé par le fait que** le diamètre extérieur de la section de préhension (52) à son extrémité libre est de 30 % à peu près et, à son extrémité montrant vers la section filetée (48), est de 65 % à peu près supérieur au diamètre extérieur de la section de piston (44).

11. Coupe/presse-ail (20) selon l'une quelconque des revendications 1 à 10, **caractérisé par le fait que** l'un au moins des deux composants, corps de réception (22) ou piston (24), est fait de polyoxyméthylène.

12. Coupe/presse-ail (20) selon l'une quelconque des revendications 1 à 10, **caractérisé par le fait que** l'un au moins des composants, corps de réception (22) ou piston (24), est fait de PTFE.

13. Coupe/presse-ail (20) selon l'une quelconque des revendications 1 à 11, **caractérisé par le fait que** l'un au moins des composants, corps de réception (22) ou piston (24), est revêtu de PTFE.

14. Coupe/presse-ail (20) selon l'une quelconque des revendications 1 à 13, **caractérisé par le fait que** lesdits orifices (58) sont ménagés dans ledit élément à couper et presser (38) selon l'un des procédés tel que l'action laser, la gravure ou le découpage au jet d'eau.

15. Coupe/presse-ail (20) selon l'une quelconque des revendications 1 à 14, **caractérisé par le fait que** ledit piston (24) est réalisé de manière creuse et présente ainsi une chambre (57).
